# FASCICULE DE BREVET EUROPEEN

(11) **EP 2 963 241 B1**
(45) Date de publication et mention de la délivrance du brevet: **06.03.2019**
(21) Numéro de dépôt: 14174984.6
(22) Date de dépôt: 30.06.2014
(51) Int. Cl.: F01D 5/14, F01D 9/04, F01D 11/20

(54) **Élément de guidage de flux gazeux de turbomachine**
Leitelement für die Gaströmung in einer Strömungsmaschine
Guiding element for a turbomachine gas flow

(43) Date de publication de la demande: 06.01.2016
(73) Titulaire: Safran Aero Boosters SA, 4041 Herstal (BE)
(72) Inventeur: Hiernaux, Stephane, 4300 Waremme (BE)
(74) Mandataire: Lecomte & Partners

(56) Documents cités:
- EP-A2- 1 995 171
- WO-A1-2008/136697
- WO-A1-2008/136698
- US-A1- 2010 040 453
- US-A1- 2011 268 556

## Description

### Domaine technique

L'invention a trait au domaine des générateurs plasmas par décharge à barrière électrique pour les turbomachines. Plus précisément, l'invention a trait à un élément de guidage de flux de turbomachine comprenant un générateur de plasma destiné à entraîner un flux le long d'une surface, éventuellement dans l'optique d'éviter les décollements de flux. L'invention a également trait à une turbomachine comprenant un système de génération de plasmas à décharge à barrières électriques pour.

### Technique antérieure

Un turboréacteur d'aéronef comprend généralement une soufflante, un compresseur, une chambre de combustion, une turbine. Lors du fonctionnement, les écoulements dans les modules peuvent présenter des instabilités, tels des phénomènes de pompage. Ces instabilités limitent les possibilités offertes par le turboréacteur, et peuvent dégrader son rendement.

Afin de contrecarrer ces désagréments, il est connu d'employer un générateur plasma par décharge électrique à barrière diélectrique qui est intégré à une surface de guidage d'un carter. Un tel générateur permet d'entraîner l'air à proximité du carter, le long de sa surface de guidage.

Le document US 2010/0040453 A1 divulgue une turbomachine pour un aéronef comprenant un carter externe muni d'un générateur de plasma. Le générateur de plasma comprend une couche de matériau diélectrique, une première électrode exposée au flux de la turbomachine, et une deuxième électrode enveloppée par la couche diélectrique de sorte à l'isoler de la première électrode. Le générateur plasma permet d'entraîner l'air le long du carter, et d'augmenter l'écoulement dans la veine correspondante. Les limites de la turbomachine sont repoussées grâce à un contrôle des instabilités pouvant survenir lors du fonctionnement. Cependant, un tel générateur nécessite une quantité d'énergie importante, et le plasma créé reste de taille réduite. La gestion des instabilités nécessite alors une quantité d'énergie pénalisant le rendement global de la turbomachine. Le plasma est hétérogène. Les documents US2011/0268556 A1, WO2008/136698 A1 et WO2008/136697 A1 divulguent des générateurs de plasmas avec une couche de matériau diélectrique associée à trois électrodes.

### Résumé de l'invention

### Problème technique

L'invention a pour objectif de résoudre au moins un des problèmes posés par l'art antérieur. Plus précisément, l'invention a pour objectif d'améliorer le rendement global d'une turbomachine comprenant un générateur plasma. L'invention a également pour objectif d'augmenter la stabilité d'un écoulement dans une turbomachine comprenant un élément de guidage de flux muni d'un générateur plasma. L'invention a également pour objectif de réduire les phénomènes de pompage dans une turbomachine comprenant un élément de guidage de flux muni d'un générateur plasma.

### Solution technique

L'invention a pour objet un élément de guidage de flux gazeux de turbomachine, notamment de compresseur, l'élément comprenant un générateur de plasma comportant une couche de matériau diélectrique avec une surface de guidage en contact du flux gazeux de la turbomachine, une première électrode placée dans la surface de guidage, une deuxième électrode isolée électriquement de la première électrode à l'aide de la couche diélectrique, le générateur de plasma étant configuré de sorte à entraîner le flux gazeux le long de la surface de guidage depuis la première électrode vers la deuxième électrode, remarquable en ce que le générateur de plasma comprend en outre une troisième électrode recouverte par la couche diélectrique et raccordée électriquement à la deuxième électrode de sorte à participer à la génération du plasma en combinaison de la première électrode et la deuxième électrode, la deuxième électrode étant plus proche de la surface de guidage que la troisième électrode.

Selon un mode avantageux de l'invention, la couche diélectrique comprend une surface opposée à la surface de guidage selon l'épaisseur de la couche diélectrique, la troisième électrode étant disposée sur ladite surface opposée, préférentiellement la surface de guidage et la surface opposée sont des surfaces principales de la couche diélectrique.

Selon un mode avantageux de l'invention, la troisième électrode est disposée entre la deuxième électrode et la première électrode selon le sens d'écoulement du flux gazeux, préférentiellement la troisième électrode est disposée au milieu entre la première électrode et la deuxième électrode selon le sens d'écoulement du flux gazeux.

Selon un mode avantageux de l'invention, le flux gazeux est un flux annulaire primaire de la turbomachine, la première électrode étant disposée en amont du flux primaire et la deuxième électrode étant disposée en aval du flux primaire, éventuellement les électrodes occupent la majorité de la longueur de l'élément.

Selon un mode avantageux de l'invention, la deuxième électrode et la troisième électrode sont isolées électriquement du flux gazeux et/ou de la première électrode grâce à la couche diélectrique, préférentiellement la deuxième électrode est enveloppée dans la couche diélectrique ou recouverte d'un revêtement diélectrique.

Selon un mode avantageux de l'invention, la couche de matériau diélectrique comprend des fibres de sorte à former un matériau composite, éventuellement au moins une ou chaque électrode est en contact de fibres de verre.

Selon un mode avantageux de l'invention, la deuxième électrode et la troisième électrode sont raccordées à une masse du générateur de plasma, préférentiellement la deuxième électrode et la troisième électrode sont branchées électriquement en parallèle.

Selon un mode avantageux de l'invention, l'élément est une virole de turbomachine, la virole comprend un bord amont et un bord aval, éventuellement la première électrode est disposée au niveau du bord amont et la deuxième électrode est disposée au niveau du bord aval.

Selon un mode avantageux de l'invention, la virole est formée de plusieurs segments séparés par des jeux de séparation, la première électrode et la deuxième électrode étant disposées de part et d'autre d'un des jeux de séparation, la troisième électrode traversant l'un des jeux de séparation.

Selon un mode avantageux de l'invention, la virole est une virole interne et la surface de guidage est une surface externe de guidage, la première électrode et la deuxième électrode étant disposées sur la surface externe de guidage de la virole.

Selon un exemple de l'invention, la virole est une virole interne qui comprend une surface annulaire externe destinée à guider un flux annulaire, et une surface annulaire interne, la première électrode et la deuxième électrode étant disposées au niveau du bord aval, la première électrode étant du côté de la surface interne, et la deuxième électrode étant du côté de la surface externe de la virole.

Selon un mode avantageux de l'invention, l'élément est une aube de turbomachine, éventuellement une aube statorique de compresseur, l'aube comprenant un bord d'attaque, un bord de fuite, une surface intrados et une surface extrados qui s'étendent du bord d'attaque au bord de fuite, la première électrode et la deuxième électrode sont disposées sur la surface extrados de l'aube et la troisième électrode est disposée du côté intrados de l'aube.

Selon un mode avantageux de l'invention, le milieu de la corde de l'aube est disposé au niveau de la première électrode.

Selon un mode avantageux de l'invention, la deuxième électrode forme le bord de fuite de l'aube, préférentiellement l'aube comprend un bord d'attaque métallique qui est isolé électriquement des électrodes grâce à la couche diélectrique.

Selon un mode avantageux de l'invention, la première électrode et la deuxième électrode sont décalées l'une par rapport à l'autre selon l'étendue de la bande.

Selon un mode avantageux de l'invention, la couche diélectrique peut comprendre un empilement de plusieurs couches de matériau diélectrique.

Selon un mode avantageux de l'invention, les électrodes sont reliées à un générateur de tension.

Selon un mode avantageux de l'invention, le générateur de tension est relié à la masse.

Selon un mode avantageux de l'invention, les électrodes sont généralement parallèles.

Selon un mode avantageux de l'invention, la première électrode et la deuxième électrode sont intégrées dans l'épaisseur de l'élément et affleurent sa surface extérieure.

Selon un mode avantageux de l'invention, les électrodes sont intégrées dans l'épaisseur de la couche de matière diélectrique.

Selon un mode avantageux de l'invention, la première électrode est généralement plane et en contact du flux gazeux, la deuxième électrode et la troisième électrode étant décalées par rapport au plan général de la première électrode.

Selon un mode avantageux de l'invention, la virole est une virole pour turbomachine axiale, le milieu axial de la virole étant au niveau axial de la troisième électrode.

Selon un mode avantageux de l'invention, le générateur plasma comprend un élément conducteur reliant la deuxième électrode à la troisième électrode.

L'invention a également pour objet une turbomachine comprenant au moins un élément de guidage de flux gazeux, caractérisée en ce que l'élément est conforme à l'invention, préférentiellement la turbomachine comprend un dispositif d'alimentation en courant de chaque élément, et/ou une batterie pour alimenter en courant chaque élément, la batterie étant éventuellement reliée au dispositif d'alimentation de la turbomachine.

### Avantages apportés

Les électrodes permettent en outre de renforcer mécaniquement l'élément de guidage. Le plasma est plus homogène. Il est obtenu avec moins d'énergie et accélère d'avantage le flux. La marge de stabilité de la turbomachine est augmentée, les pertes secondaires sont limitées.

### Brève description des dessins

La figure 1 représente une turbomachine axiale selon l'invention.
La figure 2 est un schéma d'un compresseur de turbomachine selon l'invention.
La figure 3 illustre un élément de guidage, telle une virole interne, selon un premier mode de réalisation de l'invention.
La figure 4 illustre un élément de guidage, telle une virole interne, selon un deuxième exemple ne faisant pas partie de l'invention.
La figure 5 illustre un élément de guidage, telle une virole interne, selon un troisième mode de réalisation de l'invention.
La figure 6 illustre un élément de guidage, telle une aube, selon un quatrième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

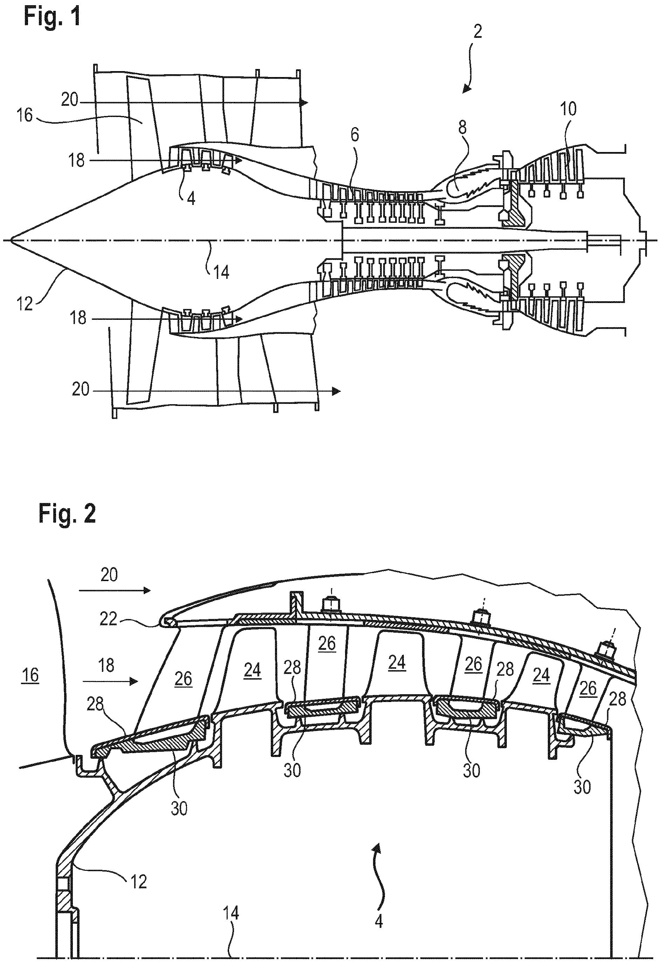

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Les différents niveaux de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction. Les flux primaire 18 et secondaire 20 sont des flux annulaires, ils sont guidés par le carter de la turbomachine. A cet effet, le carter présente des parois cylindriques ou viroles qui peuvent être internes et externes pour guider l'intérieur ou l'extérieur d'un flux annulaire.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur, et peuvent y être fixées à l'aide d'un axe. Elles sont régulièrement espacés les unes des autres, et présentent une même orientation angulaire dans le flux. Avantageusement, les aubes d'une même rangée sont identiques. Eventuellement, l'espacement entre les aubes peut varier localement tout comme leur orientation angulaire. Certaines aubes peuvent être différentes du reste des aubes de leur rangée, par exemple par la présence ou la configuration de générateurs plasma.

Les extrémités internes des aubes statoriques 26 peuvent supporter une virole interne 28. Chaque virole interne 28 présente une forme circulaire, et peut être segmentée. Au moins une ou chaque virole interne peut être formée de segments angulaires. Au moins une ou chaque virole interne 28 peut permettre de relier mécaniquement plusieurs aubes statoriques 26 d'une même rangée. Chaque virole interne peut permettre de guider et/ou de délimiter le flux primaire 18.

Au moins une ou chaque virole interne 28 peut comprendre une couche d'étanchéité, telle une couche abradable 30 ou couche friable. Chaque couche d'abradable 30 peut être destinée à coopérer avec des léchettes, ou nervures annulaires formées sur la surface extérieure du rotor 12 afin d'assurer une étanchéité. Chaque couche d'abradable 30 peut être à base de silicone. La combinaison de léchettes et d'une couche d'abradable permet de limiter les recirculations qui se réinjectent en amont de la virole interne en longeant le rotor 12.

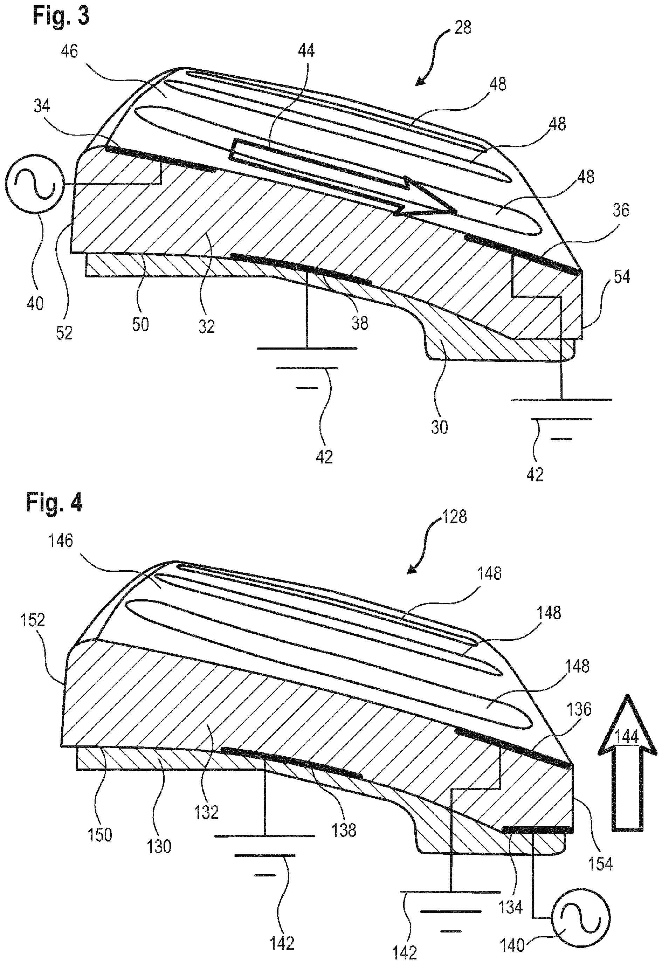

La figure 3 représente un élément de guidage de flux, telle une virole 28, éventuellement interne, de turbomachine. La virole 28 peut être celle d'un compresseur, par exemple basse-pression, tel que celui représenté à la figure 2. La virole peut tout aussi bien être une virole de compresseur haute pression, ou une virole de turbine.

La virole 28 ou chaque virole peut comprendre au moins un générateur de plasma, qui peut comporter une couche de matériau diélectrique 32, une première électrode 34, une deuxième électrode 36, une troisième électrode 38, un générateur de tension 40 branché à au moins une des électrodes. Le générateur de plasma peut comprendre une masse 42. Un générateur de tension peut être commun à plusieurs générateurs de plasma qui sont disposés à différents endroits de la virole, et/ou sur plusieurs viroles, et/ou à plusieurs endroits de la turbomachine. Le ou chaque générateur plasma est configuré de sorte à ioniser une partie du gaz, et à entraîner les ions formés à l'aide d'un champ électrique. Les ions entraînés entraînent à leur tour une partie du flux gazeux 44 le long de surface de guidage 46 d'amont en aval.

La couche diélectrique 32 peut présenter une forme annulaire, et éventuellement former un corps annulaire. Elle peut former la majorité de l'épaisseur radiale de la virole interne 28 et/ou la totalité de la longueur axiale de la virole 28. Elle peut relier mécaniquement plusieurs aubes statoriques entre elles. Elle peut comprendre des cavités 48 ou des poches 48 dans lesquelles sont fixées les extrémités d'aubes.

La couche diélectrique 32 peut être un matériau qui isole électriquement les électrodes (34 ; 36 ; 38) les unes des autres. Elle peut comprendre du verre, des matériaux polymères tels de la résine d'époxy, du polypropylène, du polyéthylène, du téflon ou une combinaison de ces matériaux. Elle peut être un matériau composite, avec une résine renforcée par des fibres. La résine peut être un matériau polymère tels que ceux précités, les fibres pouvant être en verre. La couche diélectrique 32 peut comprendre une surface de guidage 46 du flux gazeux circulant dans la turbomachine, il peut s'agir de la surface extérieure de la virole 28 qui délimite l'intérieur du flux primaire. La couche diélectrique 32 peut être formée de plusieurs strates de matériau diélectrique. La couche diélectrique 32 peut comprendre, selon son épaisseur radiale, une surface opposée 50 à la surface de guidage 46. Lesdites surfaces peuvent être des surfaces principales, qui sont principales par leurs tailles.

Au moins une ou chaque électrode (34 ; 36 ; 38) peut être circulaire et parcourir le tour de la virole 28. Elles peuvent être métallique. Alternativement, au moins une, ou certaines, ou toutes les électrodes (34 ; 36 ; 38) peuvent être segmentées, par exemple pour être placées entre les aubes statoriques en étant réparties autour de la virole 28. Selon le profil de révolution de la virole, les électrodes (34 ; 36 ; 38) peuvent être généralement parallèles les unes aux autres. La première 34, la deuxième 36 et la troisième 38 électrodes peuvent être décalées axialement et/ou radialement les unes des autres. En combinaison, elles peuvent s'étendre sur la majorité axiale de la virole 28.

La première électrode 34 peut être disposée en amont de la virole interne 28. Elle peut être disposée dans la moitié amont de la virole, éventuellement au niveau du bord amont 52. Elle est branchée au générateur de tension 40, éventuellement directement. Elle peut être placée dans la surface de guidage 46 ; c'est-à-dire qu'elle peut être entourée par la surface de guidage 46, et/ou être intégrée dedans en formant une continuité de surface. La surface de la première électrode 34 peut être en contact du flux primaire de la turbomachine. Ladite surface peut affleurer la surface de guidage.

La deuxième électrode 36 est isolée électriquement de la première électrode grâce à la couche diélectrique 32. Une isolation électrique peut s'entendre comme une séparation physique permettant malgré tout la création d'un plasma. La deuxième électrode 36 peut être enveloppée par la couche diélectrique 32. Elle peut être en retrait de la surface de guidage 46. Elle peut être recouverte sur une face par la couche diélectrique 32 et être revêtue par un isolant sur l'autre face, par exemple avec du matériau diélectrique. Elle peut être reliée au générateur de tension 40 à la borne opposée à celle à laquelle est branchée la première électrode 34. Elle peut être connectée à la masse 42. La deuxième électrode 36 est disposée en aval de la première électrode 34, par exemple dans la moitié aval de la virole 28, éventuellement au niveau axialement du bord aval 54 de virole.

La troisième électrode 38 est recouverte par la couche diélectrique 32 de sorte à être isolée électriquement de la première électrode 34 et de la deuxième électrode 36. Elle peut être disposée sur la surface opposée 50 de la couche diélectrique. Elle peut être plus éloignée de la surface de guidage que ne l'est la deuxième électrode 36. Elle est disposée axialement entre la première électrode 34 et la deuxième électrode 36. La troisième électrode 38 peut être branchée à la deuxième électrode 36, éventuellement directement grâce à un élément conducteur, ou via la masse 42 commune du circuit électrique du générateur de plasma. Elle peut être branchée au générateur de tension 40 et/ou à la masse 42 de la même manière que la deuxième électrode 36.

La couche d'abradable 30 peut recouvrir la troisième électrode 38, et éventuellement l'encapsuler en combinaison de la couche diélectrique 32. La couche diélectrique 32 peut former une barrière électrique entre la première électrode 34 d'une part, et les deuxième et troisième électrodes.

Grâce à l'agencement qui vient d'être décrit, les électrodes (34 ; 36 ; 38) permettent de générer un plasma en combinaison.

La figure 4 représente un élément de guidage 128 selon un deuxième exemple non revendiqué ne faisant pas partie de l'invention. Cette figure 4 reprend la numérotation des figures précédentes pour les éléments identiques ou similaires, la numération étant toutefois incrémentée de 100. Des numéros spécifiques sont utilisés pour les éléments spécifiques à cet exemple.

La virole 128 diffère essentiellement du premier mode de réalisation en ce que la première électrode 134 est disposée au niveau du bord aval 154 de la virole, sur la surface interne de la couche diélectrique 132. Une des faces de la première électrode 134 peut être recouverte par la couche d'abradable 130, éventuellement majoritairement. La surface de guidage 146 est alors la surface aval de la virole. Une tranche de la première électrode 134 peut être délimitée par la couche d'abradable 130 et la couche diélectrique 132. Cette architecture de générateur de plasma permet de s'opposer aux recirculations de flux sous la virole. Le générateur de plasma peut alors être configuré de sorte à entraîner un flux de gaz 144 circulant radialement vers l'extérieur.

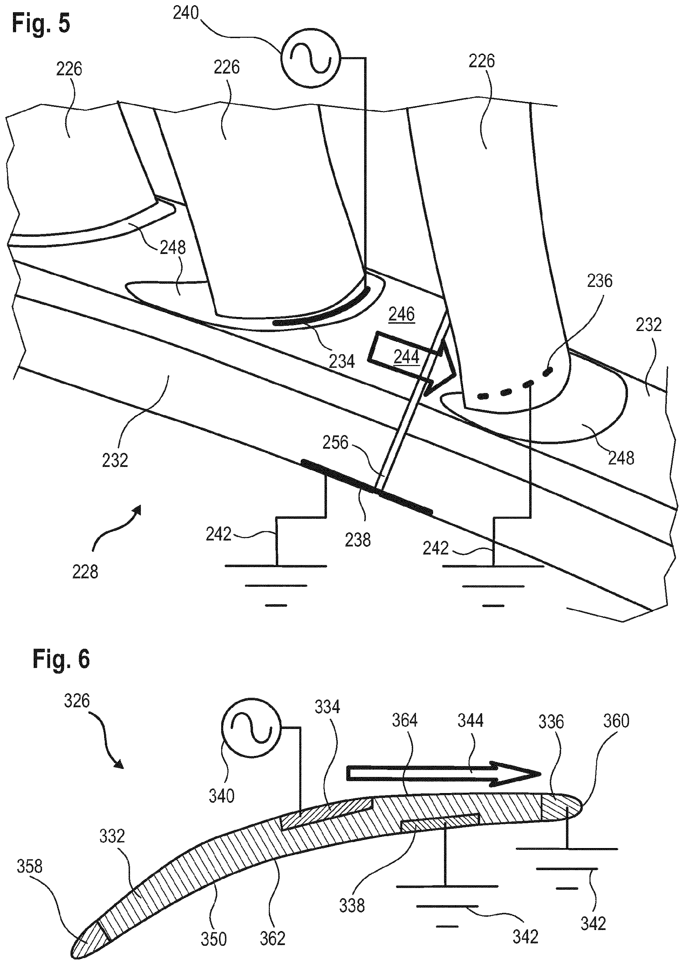

La figure 5 représente un élément de guidage selon un troisième mode de réalisation de l'invention. Cette figure 5 reprend la numérotation des figures précédentes pour les éléments identiques ou similaires, la numération étant toutefois incrémentée de 200. Des numéros spécifiques sont utilisés pour les éléments spécifiques à ce mode de réalisation.

La virole 228 peut être segmentée. Elle peut présenter des jeux 256 ouverts qui forment des séparations angulaires entre les segments. Elle peut en outre présenter des poches 248 ou des ajours pour l'introduction et la fixation des extrémités d'aubes 226.

La troisième électrode 238 est disposée en travers d'un jeu 256 entre des segments de virole voisins. Elle peut s'étendre sur les deux segments de virole 228 de part et d'autre du jeu 256. La première électrode 234 est disposée d'un côté du jeu 256, et la deuxième électrode 236 est disposée de l'autre côté du jeu 256, la première électrode 234 et la deuxième électrode 236 étant disposées sur une même face radiale de la virole 228, par exemple la surface extérieure. Au moins une électrode, par exemple la première électrode 234, peut être disposée en pied d'aube, par exemple au niveau d'une poche 248 de fixation d'aube.

Cette configuration permet de générer un plasma qui peut enjamber un jeu 256 de séparation. Ce plasma peut entraîner un flux 246 ou écoulement le long de la surface externe de la virole, selon sa circonférence, en évitant à l'écoulement de s'engouffrer dans le jeu.

La figure 6 représente un élément de guidage selon un quatrième mode de réalisation de l'invention. Cette figure 6 reprend la numérotation des figures précédentes pour les éléments identiques ou similaires, la numération étant toutefois incrémentée de 300. Des numéros spécifiques sont utilisés pour les éléments spécifiques à ce mode de réalisation.

L'élément de guidage est alors une aube 326, telle une aube statorique. Il est évident pour l'homme de métier que la présente invention peut indifféremment s'appliquer à une aube rotorique, une aube de soufflante. L'aube 326 comprend une pale destinée à s'étendre dans le flux de la turbomachine, la pale présentant un bord d'attaque 358, un bord de fuite 360, une surface intrados 362 et une surface extrados 364, lesdites surfaces s'étendant du bord d'attaque 358 au bord de fuite 360. La pale est majoritairement formée par la couche de matériau diélectrique 332. Le matériau diélectrique 332 est avantageusement un matériau composite de sorte à optimiser la résistance mécanique. La couche diélectrique montre une moitié intrados et une moitié extrados.

La pale de l'aube 326 présente un profil cambré et une corde. La première électrode 334 est disposée sur la surface extrados 364, par exemple au niveau du milieu de la corde de l'aube 326, ou au milieu axialement de l'aube. Le bord de fuite 360 peut être formé par la deuxième électrode 336 qui est séparée et/ou isolée électriquement de la première électrode 334 par la couche diélectrique 334. La troisième électrode 338 est disposée sur la surface opposée 350 à la surface extrados 364, soit la surface intrados 362. La première électrode 334 peut être logée dans l'épaisseur de la moitié extrados, et la troisième électrode 338 peut être logée dans l'épaisseur de la moitié intrados. Eventuellement, la deuxième électrode présente une épaisseur sensiblement égale à l'épaisseur de la partie aval de la couche diélectrique 332. La troisième électrode 338 peut alors être d'avantage à distance de la surface extrados 364 que la deuxième électrode 336. Elle peut être disposée axialement entre la première et la deuxième électrode, éventuellement au milieu.

Les électrodes (334 ; 336 ; 338) peuvent chacune s'étendre sur la majorité de la hauteur radiale de la pale de l'aube 326, éventuellement sur la totalité de sa hauteur radiale. L'aube 326 peut comprendre un bord d'attaque 358 métallique qui pourrait être une électrode. Ce bord d'attaque peut être isolé des autres électrodes via la couche diélectrique 332. Dans cette configuration, l'aube est totalement formée par le générateur plasma, éventuellement hormis son bord d'attaque.

Grâce à la présente configuration, le générateur plasma permet d'entraîner le flux 344 le long de la surface extrados 364 de l'aube 326. Davantage de flux 344 suit alors le profil de l'aube. Cette dernière devient plus efficace pour guider et/ou dévier, et/ou accélérer le flux.

Tous les modes de réalisation de l'invention peuvent être combinés sur un même redresseur, sur une même virole, sur une turbomachine. La description qui précède traite d'un trio d'électrodes formant un générateur de plasma. La portée de l'invention vise également des aubes, des viroles, des turbomachines ayant chacune un ou plusieurs trios d'électrodes, chaque trio formant chacun un générateur de plasma. Un ou chaque ou plusieurs trios d'électrodes sont conformes à la description précédente.

## Revendications

1. Elément de guidage (28; 228; 326) de flux gazeux (44 ; 244 ; 344) de turbomachine (2), notamment de compresseur (4 ; 6), l'élément comprenant un générateur de plasma comportant:
- une couche de matériau diélectrique (32 ; 232 ; 332) avec une surface de guidage (46 ; 246) en contact du flux gazeux de la turbomachine,
- une première électrode (34 ; 234 ; 334) placée dans la surface de guidage,
- une deuxième électrode (36 ; 236 ; 336) isolée électriquement de la première électrode à l'aide de la couche diélectrique (32 ; 232 ; 332), le générateur de plasma étant configuré de sorte à entraîner le flux gazeux (44 ; 244 ; 344) le long de la surface de guidage depuis la première électrode vers la deuxième électrode,
le générateur de plasma comprend en outre une troisième électrode (38 ; 238 ; 338) recouverte par la couche diélectrique (32 ; 232 ; 332) et raccordée électriquement à la deuxième électrode (36 ; 236 ; 336) de sorte à participer à la génération du plasma en combinaison de la première électrode et la deuxième électrode, la deuxième électrode (36 ; 236 ; 336) étant plus proche de la surface de guidage que la troisième électrode (38 ; 238 ; 338), **caractérisé en ce que**
la couche diélectrique (32 ; 232 ; 332) comprend une surface opposée (50) à la surface de guidage (46 ; 246) selon l'épaisseur de la couche diélectrique, la troisième électrode (38 ; 238 ; 338) étant disposée sur ladite surface opposée.

2. Elément (28 ; 228 ; 326) selon la revendication 1, **caractérisé en ce que** la surface de guidage (46 ; 246) et la surface opposée sont des surfaces principales de la couche diélectrique (32 ; 232 ; 332).

3. Elément (28 ; 228 ; 326) selon l'une des revendications 1 à 2, **caractérisé en ce que** la troisième électrode (38 ; 238 ; 338) est disposée entre la deuxième électrode (36 ; 236 ; 336) et la première électrode (34 ; 234 ; 334) selon le sens d'écoulement du flux gazeux (44 ; 244 ; 344), préférentiellement la troisième électrode est disposée au milieu entre la première électrode et la deuxième électrode selon le sens d'écoulement du flux gazeux.

4. Elément (28 ; 228 ; 326) selon l'une des revendications 1 à 3, **caractérisé en ce que** le flux gazeux est un flux annulaire primaire (18) de la turbomachine (2), la première électrode (34 ; 234 ; 334) étant disposée en amont du flux primaire (18) et la deuxième électrode (36 ; 236 ; 336) étant disposée en aval du flux primaire (18), éventuellement les électrodes occupent la majorité de la longueur de l'élément (28 ; 228 ; 326).

5. Elément (28 ; 228 ; 326) selon l'une des revendications 1 à 4, **caractérisé en ce que** la deuxième électrode (36 ; 236 ; 336) et la troisième électrode (38 ; 238 ; 338) sont isolées électriquement du flux gazeux (44 ; 244 ; 344) et/ou de la première électrode grâce à la couche diélectrique (32 ; 232 ; 332), préférentiellement la deuxième électrode est enveloppée dans la couche diélectrique ou recouverte d'un revêtement diélectrique.

6. Elément (28 ; 228 ; 326) selon l'une des revendications 1 à 5, **caractérisé en ce que** la couche de matériau diélectrique (32 ; 232 ; 332) comprend des fibres de sorte à former un matériau composite, éventuellement au moins une ou chaque électrode est en contact de fibres de verre.

7. Elément (28 ; 228 ; 326) selon l'une des revendications 1 à 6, **caractérisé en ce que** la deuxième électrode (36 ; 236 ; 336) et la troisième électrode (38 ; 238 ; 338) sont raccordées à une masse (42 ; 242 ; 342) du générateur de plasma, préférentiellement la deuxième électrode et la troisième électrode sont branchées électriquement en parallèle.

8. Elément (28 ; 228) selon l'une des revendications 1 à 7, **caractérisé en ce qu'**il est une virole (28 ; 228) de turbomachine (2), la virole comprend un bord amont (52) et un bord aval (54), éventuellement la première électrode est disposée au niveau du bord amont et la deuxième électrode est disposée au niveau du bord aval.

9. Elément (28 ; 228) selon la revendication 8, **caractérisé en ce que** la virole (28 ; 228) est formée de plusieurs segments séparés par des jeux de séparation (256), la première électrode (34 ; 234) et la deuxième électrode (36 ; 236) étant disposées de part et d'autre d'un des jeux (256) de séparation, la troisième électrode (38 ; 238 ; 338) traversant l'un des jeux (256) de séparation.

10. Elément (28) selon l'une des revendications 8 à 9, **caractérisé en ce que** la virole (28) est une virole interne et la surface de guidage (46) est une surface externe de guidage, la première électrode (34) et la deuxième électrode (36) étant disposées sur la surface externe (46) de guidage de la virole (28).

11. Elément (326) selon l'une des revendications 1 à 7, **caractérisé en ce qu'**il est une aube (326) de turbomachine, éventuellement une aube statorique (326) de compresseur, l'aube (326) comprenant un bord d'attaque (358), un bord de fuite (360), une surface intrados (362) et une surface extrados (364) qui s'étendent du bord d'attaque (358) au bord de fuite (360), la première électrode (334) et la deuxième électrode (336) sont disposées sur la surface extrados (364) de l'aube et la troisième électrode (338) est disposée du côté intrados (362) de l'aube.

12. Elément (326) selon la revendication 11, **caractérisé en ce que** le milieu de la corde de l'aube (326) est disposé au niveau de la première électrode (334).

13. Elément (326) selon l'une des revendications 11 à 12, **caractérisé en ce que** la deuxième électrode (336) forme le bord de fuite (360) de l'aube, préférentiellement l'aube comprend un bord d'attaque métallique qui est isolé électriquement des électrodes grâce à la couche diélectrique.

14. Turbomachine axiale (2) comprenant au moins un élément de guidage de flux gazeux (28 ; 228 ; 326), **caractérisée en ce que** l'élément est conforme à l'une des revendications 1 à 13, préférentiellement la turbomachine (2) comprend un dispositif d'alimentation en courant de chaque élément, et/ou une batterie pour alimenter en courant chaque élément, la batterie étant éventuellement reliée au dispositif d'alimentation de la turbomachine (2).

## Patentansprüche

1. Leitelement (28; 228; 326) für den Gasstrom (44; 244; 344) einer Turbomaschine (2), spezieller eines Verdichters (4; 6), wobei das Element einen Plasmagenerator umfasst, umfassend:
- eine Schicht dielektrischen Materials (32; 232; 332) mit einer Leitoberfläche (46; 246) in Kontakt mit dem Gasstrom der Turbomaschine,
- eine in der Leitoberfläche angeordnete erste Elektrode (34; 234; 334),
- eine zweite Elektrode (36; 236; 336), die mittels der dielektrischen Schicht (32; 232; 332) elektrisch von der ersten Elektrode isoliert ist, wobei der Plasmagenerator so ausgelegt ist, dass er den Gasstrom (44; 244; 344) entlang der Leitoberfläche von der ersten Elektrode zu der zweiten Elektrode treibt,
wobei der Plasmagenerator weiter eine dritte Elektrode (38; 238; 338) umfasst, die von der dielektrischen Schicht (32; 232; 332) bedeckt und elektrisch mit der zweiten Elektrode (36; 236; 336) verbunden ist, um an der Erzeugung des Plasmas in Kombination mit der ersten Elektrode und der zweiten Elektrode teilzunehmen, wobei sich die zweite Elektrode (36; 236; 336) näher an der Leitoberfläche befindet als die dritte Elektrode (38; 238; 338),
**dadurch gekennzeichnet, dass** die dielektrische Schicht (32; 232; 332) eine entgegengesetzte Oberfläche (50) umfasst, entgegengesetzt zu der Leitoberfläche (46; 246) in der Richtung der Dicke der dielektrischen Schicht, wobei die dritte Elektrode (38; 238; 338) an dieser entgegengesetzten Oberfläche angeordnet ist.

2. Leitelement (28; 228; 326) nach Anspruch 1, **dadurch gekennzeichnet, dass** die Leitoberfläche (46; 246) und die entgegengesetzte Oberfläche Hauptoberflächen der dielektrischen Schicht (32; 232; 332) sind.

3. Leitelement (28; 228; 326) nach den Ansprüchen 1 bis 2, **dadurch gekennzeichnet, dass** die dritte Elektrode (38; 238; 338) zwischen der zweiten Elektrode (36; 236; 336) und der ersten Elektrode (34; 234; 334) in der Strömungsrichtung des Gasstroms (44; 244; 344) angeordnet ist; bevorzugt befindet sich die dritte Elektrode in der Mitte zwischen der ersten Elektrode und der zweiten Elektrode in der Strömungsrichtung des Gasstroms.

4. Leitelement (28; 228; 326) nach einem der Ansprüche 1 bis 3, **dadurch gekennzeichnet, dass** der Gasstrom ein primärer ringförmiger Strom (18) der Turbomaschine (2) ist, wobei die erste Elektrode (34; 234; 334) stromaufwärts von dem primären Strom (18) angeordnet ist und die zweite Elektrode (36; 236; 336) stromabwärts von dem primären Strom (18) angeordnet ist; optional erstrecken sich die Elektroden entlang des Großteils der Länge des Elements (28; 228; 326).

5. Leitelement (28; 228; 326) nach einem der Ansprüche 1 bis 4, **dadurch gekennzeichnet, dass** die zweite Elektrode (36; 236; 336) und die dritte Elektrode (38; 238; 338) dank der dielektrischen Schicht (32; 232; 332) elektrisch von dem Gasstrom (44; 244; 344) und/oder von der ersten Elektrode isoliert sind; bevorzugt ist die zweite Elektrode in die dielektrische Schicht eingebettet oder mit einer dielektrischen Beschichtung bedeckt.

6. Leitelement (28; 228; 326) nach einem der Ansprüche 1 bis 5, **dadurch gekennzeichnet, dass** die Schicht dielektrischen Materials (32; 232; 332) Fasern umfasst, sodass sie einen Verbundwerkstoff bildet; optional ist mindestens eine oder jede Elektrode in Kontakt mit Glasfasern.

7. Leitelement (28; 228; 326) nach einem der Ansprüche 1 bis 6, **dadurch gekennzeichnet, dass** die zweite Elektrode (36; 236; 336) und die dritte Elektrode (38; 238; 338) mit einem Erdanschluss (42; 242; 342) des Plasmagenerators verbunden sind; bevorzugt sind die zweite Elektrode und die dritte Elektrode elektrisch parallel geschaltet.

8. Leitelement (28; 228) nach einem der Ansprüche 1 bis 7, **dadurch gekennzeichnet, dass** das Element ein Mantel (28; 228) einer Turbomaschine (2) ist, wobei der Mantel eine stromaufwärtige Kante (52) und eine stromabwärtige Kante (54) umfasst; optional ist die erste Elektrode an der stromaufwärtigen Kante angeordnet und ist die zweite Elektrode an der stromabwärtigen Kante angeordnet.

9. Leitelement (28; 228) nach Anspruch 8, **dadurch gekennzeichnet, dass** der Mantel (28; 228) aus mehreren Segmenten gebildet ist, die durch Trennspalte (256) getrennt sind, wobei die erste Elektrode (34; 234) und die zweite Elektrode (36; 236) zu beiden Seiten eines der Trennspalte (256) angeordnet sind, wobei sich die dritte Elektrode (38; 238; 338) über einen der Trennspalte (256) erstreckt.

10. Leitelement (28) nach einem der Ansprüche 8 bis 9, **dadurch gekennzeichnet, dass** der Mantel (28) ein innerer Mantel ist und die Leitoberfläche (46) eine äußere Leitoberfläche ist, wobei die erste Elektrode (34) und die zweite Elektrode (36) an der äußeren Leitoberfläche (46) des Mantels (28) angeordnet sind.

11. Leitelement (326) nach einem der Ansprüche 1 bis 7, **dadurch gekennzeichnet, dass** das Element eine Turbomaschinen-Leitschaufel (326) ist, optional eine Verdichterstatorschaufel (326), wobei die Leitschaufel (326) eine Anströmkante (358), eine Abströmkante (360), eine Druckseite (362) und eine Saugseite (364), die sich von der Anströmkante (358) zu der Abströmkante (360) erstrecken, umfasst, wobei die erste Elektrode (334) und die zweite Elektrode (336) an der Saugseite (364) der Leitschaufel angeordnet sind und die dritte Elektrode (338) an der Druckseite (362) der Leitschaufel angeordnet ist.

12. Leitelement (326) nach Anspruch 11, **dadurch gekennzeichnet, dass** die Mitte der Sehnenlinie der Leitschaufel (326) an der ersten Elektrode (334) angeordnet ist.

13. Leitelement (326) nach einem der Ansprüche 11 bis 12, **dadurch gekennzeichnet, dass** die zweite Elektrode (336) die Abströmkante (360) der Leitschaufel bildet; bevorzugt umfasst die Leitschaufel eine Anströmkante aus Metall, die durch die dielektrische Schicht elektrisch von den Elektroden isoliert ist.

14. Axialströmungsturbomaschine (2), umfassend mindestens ein Gasstrom-Leitelement (28; 228; 326), **dadurch gekennzeichnet, dass** das Element in Übereinstimmung mit einem der Ansprüche 1 bis 13 ist; bevorzugt umfasst die Turbomaschine (2) eine Stromversorgungsvorrichtung für jedes Element und/oder eine Batterie zur Speisung jedes Elements, wobei die Batterie optional mit der Stromversorgungsvorrichtung der Turbomaschine (2) verbunden ist.

## Claims

1. A guiding element (28 ; 228; 326) of gaseous flow (44 ; 244 ; 344) of a turbomachine (2), in particular a compressor (4; 6), the element including a plasma generator, comprising:
- a layer of dielectric material (32; 232; 332) with a guiding surface (46; 146; 246) in contact with the gaseous flow of the turbomachine,
- a first electrode (34; 234; 334) arranged in the guiding surface,
- a second electrode (36; 236; 336) electrically isolated from the first electrode by means of the dielectric layer (32; 232; 332), the plasma generator being configured so as to drive the gaseous flow (44; 244; 344) along the guiding surface from the first electrode towards the second electrode,
the plasma generator further comprising a third electrode (38; 238; 338) covered by the dielectric layer (32; 232; 332) and electrically connected to the second electrode (36; 236; 336) so as to participate in the generation of the plasma in combination with the first electrode and the second electrode, the second electrode (36; 236; 336) being closer to the guiding surface than the third electrode (38; 238; 338),
**characterized in that** the dielectric layer (32; 232; 332) comprises an opposite surface (50), opposite the guiding surface (46; 246) in the direction of the thickness of the dielectric layer, the third electrode (38; 238; 338) being disposed on said opposite surface.

2. The guiding element (28; 228; 326) according to claim 1, **characterised in that** the guiding surface (46; 246) and the opposite surface are main surfaces of the dielectric layer (32; 232; 332).

3. The guiding element (28; 228; 326) according to claims 1 to 2, **characterised in that** the third electrode (38; 238; 338) is arranged between the second electrode (36; 236; 336) and the first electrode (34; 234; 334) in the flow direction of the gaseous flow (44; 244; 344), preferably the third electrode is in the middle between the first electrode and the second electrode in the flow direction of the gaseous flow.

4. The guiding element (28; 228; 326) according to any one of claims 1 to 3, **characterised in that** the gaseous flow is a primary annular flow (18) of the turbomachine (2), the first electrode (34; 234; 334) being disposed upstream from the primary flow (18) and the second electrode (36; 236; 336) being disposed downstream from the primary flow (18), optionally the electrodes extend along the majority of the length of the element (28; 228; 326).

5. The guiding element (28; 228; 326) according to any one claims 1 to 4, **characterised in that** the second electrode (36; 236; 336) and the third electrode (38; 238; 338) are electrically isolated from the gas flow (44; 244; 344) and/or from the first electrode, thanks to the dielectric layer (32; 232; 332), preferably the second electrode is embedded in the dielectric layer or covered with a dielectric coating.

6. The guiding element (28; 228; 326) according to any one of claims 1 to 5, **characterised in that** layer of dielectric material (32; 232; 332) comprises fibres so as to form a composite material, optionally at least one or each electrode is in contact with glass fibres.

7. The guiding element (28; 228; 326) according to any one of claims 1 to 6, **characterised in that** the second electrode (36; 236; 336) and the third electrode (38; 238; 338) are connected to an earth connection (42; 242; 342) of the plasma generator, preferably the second electrode and the third electrode are electrically connected in parallel.

8. The guiding element (28; 228) according to any one of claims 1 to 7, **characterised in that** the element is a shell (28; 228) of a turbomachine (2), the shell comprises an upstream edge (52) and a downstream edge (54), optionally the first electrode is disposed at the upstream edge and the second electrode is disposed at the downstream edge.

9. The guiding element (28; 228) according to claim 8, **characterised in that** the shell (28; 228) is formed of several segments separated by separating gaps (256), the first electrode (34; 234) and the second electrode (36; 236) being disposed on either side of one of the separating gaps (256), the third electrode (38; 238; 338) extending over one of the separating gaps (256).

10. The guiding element (28) according to any one of claims 8 to 9, **characterised in that** shell (28) is an inner shell and the guiding surface (46) is an outer guiding surface, the first electrode (34) and the second electrode (36) being disposed on the outer guiding surface (46) of the shell (28).

11. The guiding element (326) according to any one of claims 1 to 7, **characterised in that** the element is a turbomachine blade (326), optionally a compressor stator blade (326), the blade (326) comprising a leading edge (358), a trailing edge (360), a pressure face (362) and a suction face (364) which extend from the leading edge (358) to the trailing edge (360), the first electrode (334) and the second electrode (336) being arranged on the suction face (364) of the blade and the third electrode (338) is disposed on the pressure face (362) of the blade.

12. The guiding element (326) according to claim 11, **characterised in that** the middle of the chord line of the blade (326) is disposed at the first electrode (334).

13. The guiding element (326) according to any one of claims 11 to 12, **characterised in that** the second electrode (336) forms the trailing edge (360) of the blade, preferably the blade comprises a metallic leading edge which is electrically isolated from the electrodes by the dielectric layer.

14. An axial-flow turbomachine (2) comprising at least one gaseous flow-guiding element (28; 228; 326), **characterised in that** the element is in accordance with any of the claims 1 to 13, preferably the turbomachine (2) comprises a power supply device for each element, and/or a battery to power each element, the battery being optionally connected to the power supply device of the turbomachine (2).
